# EUROPEAN PATENT APPLICATION

(11) **EP 1 482 015 A1**
(43) Date of publication of application: **01.12.2004**
(21) Application number: 03743046.9
(22) Date of filing: 27.02.2003
(51) Int. Cl.: C09J 4/00, C09J 157/00, C09J 7/02, C08F 290/06, C08F 299/04

(54) **PRESSURE-SENSITIVE ADHESIVE CURABLE WITH ACTIVE ENERGY RAY AND PRESSURE-SENSITIVE ADHESIVE SHEET**

(30) Priority: 28.02.2002 JP 2002054983
(71) Applicant: TOAGOSEI CO., LTD., Tokyo 105-8419 (JP)
(72) Inventor: KAMIYA, Daisuke c/o Toagosei Co., Ltd. Macromole., Nagoya-shi, Aichi 455-0027 (JP); TANIGUCHI, Yasuo c/o Toagosei Co., Ltd., Nagoya-shi, Aichi 455-0027 (JP); OKAZAKI, Eiichi c/o Toagosei Co., Ltd. Macromole., Nagoya-shi, Aichi 455-0027 (JP)
(74) Representative: Pohlmann, Eckart, Dipl.-Phys.
(86) International application number: PCT/JP2003/002216
(87) International publication number: WO 2003/072674

(57) **Abstract**

The present invention relates to a pressure-sensitive adhesive curable with active energy beams, which is useful as a pressure-sensitive adhesive and pressure-sensitive adhesive sheet. It is liquid at ordinary temperature, undergoes practical crosslinking and curing in the absence of a photopolymerization initiator even when irradiated with visible light or ultraviolet light, and gives a cured coating film which suffers no discoloration and is excellent not only in various pressure-sensitive adhesive performances but in water resistance and heat resistance. The adhesive contains a compound which has two or more maleimide groups represented by the following formula (1) and is liquid at ordinary temperature: 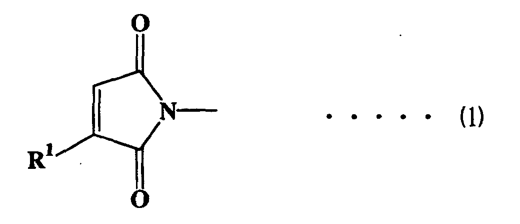 where in formula (1), R¹ represents alkyl, aryl, arylalkyl, or halogen.

## Description

### Technical Field

The present invention relates to a pressure-sensitive adhesive curable with active energy beams, which is composed of a compound containing two or more maleimide groups having a specific structure, and a pressure-sensitive adhesive sheet having an adhesive layer formed of the above described pressure-sensitive adhesive, which can be utilized with admiration in the relevant technical fields.

### Background Art

Pressure-sensitive adhesives are processed into pressure-sensitive adhesive products and used for various applications such as pressure-sensitive adhesive tapes, pressure-sensitive adhesive labels and pressure-sensitive adhesive double coated tapes; in these years, their further improvement in performance is demanded. Particularly, for use in adhesion of interior or exterior parts of vehicles, electric appliances and houses, mutual adhesion of electronic parts or the like, they are required to have excellent water resistance and high pressure-sensitive adhesiveness, namely, performances such that they can adhere under low compression at room temperature but do not peel off when allowed to stand at high temperature.

Additionally, pressure-sensitive adhesives used for first aid plasters, magnetic plasters, surgical tapes, wound-healing dressing materials (dressings), athletic tapes, tape preparations for transdermal therapeutic systems and the like are required to be high in safety because these articles are directly affixed to the skin.

For use in which heat resistance is required, pressure-sensitive adhesive products using silicone based pressure-sensitive adhesives have been investigated, but have not yet been widely used because they are problematic in that there are no excellent release materials to be associated with these products, and require use of expensive raw materials, thereby increasing the cost.

On the other hand, pressure-sensitive adhesives that are widely used are solvent based pressure-sensitive adhesives comprising acrylic polymers and rubber-based resins including SIS and SEBS dissolved in organic solvents; these pressure-sensitive adhesives are excellent in water resistance, and additionally excellent in balance of adhesive properties, and thus various investigations have been performed so as to meet the above described properties.

However, there is a fear that the solvent based pressure-sensitive adhesives might have an adverse environmental effect due to organic solvents evolved when processed into pressure-sensitive adhesive products, and additionally have an adverse effect on safety due to residual solvents contained in coating films of the pressure-sensitive adhesives. Thus, in these years, pressure-sensitive adhesives using no organic solvents come to be demanded.

As an alternative for solvent based pressure-sensitive adhesives, active energy beam-curable pressure-sensitive adhesives, which are curable with active energy beams such as visible and ultraviolet light, have been investigated because they are excellent in water resistance and heat resistance, easy to handle owing to low viscosity, and adaptable to coating devices that have been used for the solvent based adhesives.

Generally, compositions curable with active energy beams including pressure-sensitive adhesives curable with active energy beams are not crosslinked or curable as raw materials per se, and hence it is necessary to add a photopolymerization initiator or a photosensitizer (hereinafter, these are collectively referred to as photopolymerization initiator or the like).

The greater the addition amount of the photopolymerization initiator or the like is, the quicker the curing is; and thus, the addition amount is apt to be increased. However, the photopolymerization initiator or the like includes a compound having an aromatic ring so as to absorb light efficiently, thereby causing a problem of yellowing of the resultant cured films.

Additionally, the photopolymerization initiator or the like is usually composed of a low molecular weight compound so as to efficiently initiate polymerization reaction. However, when such a composition is irradiated with an active energy beam, the temperature is elevated owing to polymerization heat, and thus the low molecular weight photopolymerization initiator or the like, which is high in vapor pressure, causes problems such that malodor is generated markedly at the time of curing, thereby causing a problem of working environment, or the obtained products are contaminated. Additionally, there are problems in that decomposition products including an unreacted photopolymerization initiator and the like remain in the cured films, and hence, when the cured films are subjected to light or heat, there often occurs a problem such that the cured films turn yellow, or unfavorable odor is generated.

Furthermore, when the cured films are allowed to stay in water or the like, or the cured films are touched with sweat and the like excreted from human body, the unreacted photopolymerization initiator or the like bleeds out in a large quantity, and hence there occurs a problem of safety and health.

For the purpose of overcoming the drawbacks of the active energy beam-curable compositions that contain the photopolymerization initiator or the like, there have been investigated compositions containing neither photopolymerization initiator nor the like but curable by irradiation with active energy beams (for example, Japanese Patent Laid-Open Nos. H11-124403A, H11-124404A, 2001-219508A and 2001-220567A).

However, when compositions that contain compounds having maleimide groups disclosed in Japanese Patent Laid-Open Nos. H11-124403A and H11-124404A are used as pressure-sensitive adhesives, they often cause gelation if they are stored at a high temperature, or the cured films are poor in water resistance, namely, they deteriorate in adhesive strength and peel off if they are soaked in warm water for a long time.

On the other hand, compositions that contain compounds having maleimide groups disclosed in Japanese Patent Laid-Open Nos. 2001-219508A and 2001-220567A are both adhesives the cured coating films of which have no tackiness or are poor in tackiness, so that they are hardly usable as pressure-sensitive adhesives. Additionally, the maleimide group-containing compound disclosed in Japanese Patent Laid-Open No. 2001-220567A is crystalline with a melting point of 40°C or above, and is not liquid at ordinary temperature, so that it is particularly poor in tackiness and hardly usable as a pressure-sensitive adhesive.

The present inventors have made intensive researches for the purpose of finding an active energy beam-curable pressure-sensitive adhesive which is liquid at ordinary temperature, has a practical crosslinking property or curability in the absence of photopolymerization initiators even when irradiated with visible or ultraviolet light, and provides cured films that do not change color but are excellent in water resistance and heat resistance as well as various pressure-sensitive adhesive performances.

### Disclosure of the Invention

The present inventors have performed various investigations for the purpose of solving the above described problems, and consequently have accomplished the present invention by finding out that a pressure-sensitive adhesive containing a compound having two or more maleimide groups can solve the above described problems.

Hereinafter, detailed description of the present invention will be made.

### 1. A compound having two or more maleimide groups represented by formula (1)

The pressure-sensitive adhesive of the present invention requires, as an indispensable component, a compound (hereinafter simply referred to as a maleimide compound) having two or more maleimide groups, represented by the following formula (1): 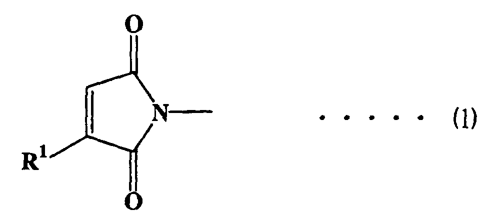 Here, in formula (1), R¹ represents an alkyl group, an aryl group, an arylalkyl group or a halogen atom.

In formula (1), as the alkyl group of R¹, an alkyl group having 4 or less carbon atoms is preferable; the aryl includes phenyl group and the like; the arylalkyl group includes benzyl group and the like; and the halogen atom includes a fluorine atom, a chlorine atom, a bromine atom and an iodine atom.

As R₁, an alkyl group is preferable among the above because of excellent reactivity of the resultant pressure-sensitive adhesive and easy availability to raw materials thereof; a methyl group is more preferable because it is most excellent in reactivity.

The maleimide compounds used in the present invention contain the above described maleimide groups, and accordingly, irradiation with an active energy beam leads to dimerization of the maleimide groups, so that the maleimide compound molecules are crosslinked to each other. Additionally, also in the case where crosslinking or curing (hereinafter these will be collectively referred to as curing) is made with the aid of ultraviolet light or visible light, the dimerization reaction can be made to occur with the aid of irradiation with ultraviolet light or visible light without blending of a photopolymerization initiator or the like, or with blending of a small amount of a photopolymerization initiator or the like.

Additionally, the maleimide compounds in the present invention are liquid at ordinary temperature; accordingly, handling including coating operation comes to be easy. On the contrary, compounds which are solid at ordinary temperature are not easy to handle, and additionally, lead to a high elastic modulus of the cured, film and thus to insufficient adhesive performance. Meanwhile, it should be noted that ordinary temperature referred to in the present invention means 25°C.

The molecular weight of the maleimide compound is preferably 2,000 to 20,000 in terms of number average molecular weight, more preferably 3,000 to 10,000, and further preferably 3,000 to 8,000. When the number average molecular weight of the maleimide compound is less than 2,000, the pressure-sensitive adhesive strength and tackiness of the cured film are lowered as the case may be, while when the number average molecular weight exceeds 20,000, the viscosity of the pressure-sensitive adhesive becomes too high, and coatability is lowered as the case may be.

Here, it should be noted that the number average molecular weight referred to in the present invention is a value converted from the molecular weight measured by gel permeation chromatography (hereinafter abbreviated as GPC) by use of tetrahydrofuran as solvent with reference to the molecular weight of polystyrene.

As the maleimide compounds to be used in the present invention, various compounds can be used as far as the compounds have the above described maleimide groups. As the maleimide compounds, compounds prepared by means of various methods can be used; however, the following 3 types of compounds are preferable because of easiness in preparation.
(1) An addition reaction product (hereinafter referred to as compound (1)) between a prepolymer having two or more isocyanate groups at terminals and a compound having a maleimide group and an active hydrogen group.
(2) An esterification reaction product (hereinafter referred to as compound (2)) between a prepolymer having two or more carboxylic groups at terminals and a compound having a maleimide group and an active hydrogen group.
(3) An esterification reaction product (hereinafter referred to as compound (3)) between a prepolymer having two or more hydroxy groups at terminals and a carboxylic acid having a maleimide group.

Now, description will be made below of the compounds (1) to (3).

### 1-1. Compound (1)

The compound (1) is an addition reaction product between a prepolymer (hereinafter simply referred to as urethane prepolymer) having two or more isocyanate groups at terminals and a compound (hereinafter simply referred to as a maleimide/active hydrogen compound) having a maleimide group and an active hydrogen group, and is prepared by reacting two or more moles of a maleimide/active hydrogen compound with 1 mole of a urethane prepolymer.

Description will be made below of the urethane prepolymer and the maleimide/active hydrogen compound.

### A) Urethane prepolymer

As the urethane prepolymer, various compounds can be used as far as the compounds each have two or more isocyanate groups at terminals of the molecule thereof.

The urethane prepolymer includes a reaction product between a polyol having two or more hydroxy groups (hereinafter simply referred to as polyol) and a polyisocyanate having two or more isocyanate groups (hereinafter simply referred to as polyisocyanate), and the like.

### a1) Polyol

The polyol includes polyester polyol, polyether polyol, polymer polyol prepared from radically polymerizable monomers, and the like. Among these, polyester polyol is preferable because the resultant cured film is low in viscosity, and the resultant pressure-sensitive adhesive is excellent in water resistance.

As the polyol, two or more types of polyols can be used as required.

### a1-1) Polyester polyol

A polyester polyol is a random condensation copolymer between a polycarboxylic acid and a polyhydric alcohol. Among the polyester polyols, an aliphatic polyester polyol is preferable because of excellent curability by active energy beams of the resultant pressure-sensitive adhesive.

In this connection, as the polycarboxylic acid, various polycarboxylic acids can be used as far as the polycarboxylic acids each have two or more carboxyl groups in molecule thereof. Specific examples include succinic acid, adipic acid, pimelic acid, suberic acid, azelaic acid, sebacic acid, dodecanedioic acid, icosanedioic acid, 2,6-naphthalene dicarboxylic acid, trimellitic acid, glutaric acid, 1,9-nonane dicarboxylic acid, 1,10-decane dicarboxylic acid, malonic acid, fumaric acid, 2,2-dimethylglutaric acid, 1,3-cyclopentane dicarboxylic acid, 1,4-cyclohexane dicarboxylic acid, 1,3-cyclohexane dicarboxylic acid, itaconic acid, maleic acid, 2,5-norbornane dicarboxylic acid, 1,4-terephthalic acid, 1,3-terephthalic acid, dimeric acid and paraoxybenzoic acid.

Among these, aliphatic dicarboxylic acids are preferable, and adipic acid and sebacic acid are more preferable.

Two or more types of the polycarboxylic acids can be used in combination, as required.

As the polyhydric alcohol, various compounds can be used as far as the compounds each have two or more hydroxy groups in molecule thereof. Specific examples thereof include butylethylpropanediol, 2,4-diethyl-1,5-pentanediol, 3-methyl-1,5-pentanediol and polyethyleneglycol, ethyleneglycol, diethyleneglycol, triethyleneglycol, tetraethyleneglycol, 1,3-propanediol, 2-butyl-2-ethyl-1,3-propanediol, 1,2-butanediol, 1,3-butanediol, 1,4-butanediol, 1,5-pentanediol, 1,6-hexanediol, 1,7-heptanediol, 1,2-octanediol, 1,8-octanediol, 1,9-nonanediol, 1,2-decanediol, 1,10-decanediol, 2,2-dimethyl-1,3-propanediol, 2,2,4-trimethyl-1,6-hexanediol, 1,3-cyclohexanedimethanol and 1,4-cyclohexanedimethanol, dimeric acid diol and 2-methyl-1,8-octanediol.

Among these, aliphatic diols are preferable, and furthermore butylethylpropanediol, 2,4-diethyl-1,5-pentanediol, 3-methyl-1,5-pentanediol, dimeric acid diol and 2-methyl-1,8-octanediol are more preferable because the resultant pressure-sensitive adhesives are low in viscosity and excellent in pressure-sensitive adhesiveness and water resistance.

Two or more types of polyhydric alcohols can be used in combination, as required.

As the maleimide compound of the present invention, as will be described later, a compound having a polyester skeleton is preferable, and detailed description will be made below of the method for preparing the polyester polyol that is the raw material for preparing the maleimide compound.

The method for preparing the polyester polyol can be in accordance with general esterification methods, and examples of the method include a method in which in the presence of a catalyst, a polycarboxylic acid and a polyhydric alcohol are heated under stirring, and the like.

As the catalyst, catalysts usually used in the esterification reaction can be used, and examples thereof include base catalysts, acid catalysts and metal alkoxides. Examples of the base catalyst include metal hydroxides such as sodium hydroxide and potassium hydroxide, and amines such as triethylamine, N,N-dimethylbenzylamine and triphenylamine. Examples of the acid catalyst include sulfuric acid and paratoluenesufonic acid. As the metal alkoxide, alkoxides of titanium, tin or zirconium are preferable. Specific examples of these metal alkoxides include tetraalkyl titanates such as tetrabutyl titanate; tin alkoxides such as dibutyltin oxide and monobutyltin oxide; and zirconium alkoxides such as zirconium tetrabutoxide and zirconium isopropoxide.

When an obtained pressure-sensitive adhesive is applied to bonding of packing materials for food and related matter, it is preferable that the addition amount of these catalysts is as small as possible.

Furthermore, among the above described catalysts, the titanium compounds are almost free from toxicity exhibited by heavy metals and can produce high molecular weight polyesters of practical use, and thus can be preferably used for the bonding of packing materials for food and related matter.

The reaction temperature and time in the esterification reaction may be appropriately set according to purposes. The reaction temperature is preferably 80 to 220°C.

As the aliphatic polyester polyols, commercially available ones can be used; examples thereof include "KURAPOL P-5010" manufactured by Kuraray Co., Ltd., "KYOWAPOL 5000 PA" and "KYOWAPOL 3000 PA" manufactured by Kyowa Hakko Kogyo Co., Ltd., and "DYNACOLL 7250" manufactured by Degussa Japan Co., Ltd.

### a1-2) Polyether polyol

The polyether polyol include polyalkyleneglycols such as polyethyleneglycol, polypropyleneglycol, polybutyleneglycol and polytetramethyleneglycol; ethylene oxide-modified products, propylene oxide-modified products, butylene oxide-modified products and tetrahydrofuran-modified products of alkyleneglycols such as ethyleneglycol, propanediol, propyleneglycol, tetramethyleneglycol, pentamethyleneglycol, hexanediol, neopentylglycol, glycerin, trimethylolpropane, pentaerythritol, diglycerin, ditrimethylolpropane and dipentaerythritol; copolymers of ethylene oxide and propylene oxide, copolymers of propyleneglycol and tetrahydrofuran and copolymers of ethyleneglycol and tetrahydrofuran; hydrocarbon based polyols such as polyisopreneglycol, hydrogenated polyisopreneglycol, polybutadieneglycol and hydrogenated polybutadieneglycol; and polytetramethylenehexaglycerylether (tetrahydrofuran-modified products of hexaglycerin).

### a1-3) Polymer polyol

As the polymer polyol prepared from radically polymerizable monomers, mention may be made of polymers composed of monomers having an ethylenically unsaturated group and a hydroxy group as an indispensable component. Specific examples include those obtained by polymerizing radically polymerizable monomers, for example, hydroxyalkyl (meth)acrylates such as hydroxyethyl (meth)acrylate and hydroxypropyl (meth)acrylate with another (meth)acrylates.

The method for preparing the polymer polyol, includes methods in which radically polymerizable monomers are subjected to solution polymerization or high temperature continuous polymerization.

### a2) Polyisocyanate

As the polyisocyanate, various compounds can be used as far as the compounds each have two or more isocyanate groups in molecule thereof. Specific examples include p-phenylene diisocyanate, 4,4'-diphenylmethane diisocyanate, tolylene diisocyanate, 4,4'-diphenylene diisocyanate, 1,5-octylene diisocyanate, trimethylene diisocyanate, tetramethylene diisocyanate, hexamethylene diisocyanate, pentamethylene diisocyanate, 1,3-cyclopentane diisocyanate, 1,4-cyclohexane diisocyanate, 4,4'-methylene bis(cyclohexyl isocyanate), methyl-2,4-cyclohexane diisocyanate, methyl-2,6-cyclohexane diisocyanate, diphenylmethane diisocyanate, 1,4-bis(isocyanatomethyl)cyclohexane, 1,3-bis(isocyanatomethyl)cyclohexane, isophorone diisocyanate and carbodiimide-modified 4,4'-diphenylmethane diisocyanate.

Among these, alicyclic and aliphatic isocyanates are preferable because they are excellent in curability of the resultant pressure-sensitive adhesives with active energy beams and in weather resistance of the cured products. As the alicyclic or aliphatic isocyanates, hexamethylene diisocyanate and isophorone diisocyanate are preferable.

Two or more types of polyisocyanates can be used in combination, as required.

In the present invention, when the urethane prepolymer is prepared, the amount of the polyisocyanate in relation to the polyol falls within the range preferably from 1.8 to 3 and more preferably from 2 to 2.5 in terms of the equivalence ratio of the group -NCO/the group -OH.

### a3) Method for preparing urethane prepolymer

The method for preparing the urethane prepolymer can follow the conventional methods. Examples of the methods include a method in which polyol and polyisocyanate are heated in the presence of a catalyst.

As the catalyst, the catalysts commonly used in urethanization reaction can be used; examples thereof include metal compounds and amines. Examples of the metal compounds include tin based catalysts such as dibutyltin laurate and tin dioctylate; lead based catalysts such as lead dioctylate; zirconium based catalysts such as K-KAT XC-4025 and K-KAT XC-6212 (manufactured by King Industries, Inc.); aluminum based catalysts such K-KAT XC-5217 (manufactured by King Industries, Inc.); and titanate based catalysts such as tetra-2-ethylhexyl titanate. Examples of the amines include triethylamine, N,N-dimethylbenzylamine, triphenylamine and triethylenediamine.

Additionally, when the urethane prepolymer is prepared, generally-used radical polymerization inhibitors such as hydroquinone and triethylamine can be used, as required, for the purpose of preventing gelation in the course of the reaction.

Furthermore, when the urethane prepolymer is prepared, phosphorus compounds can be blended. By blending phosphorus compounds, the action of the catalyst used in esterification and ring-opening polyaddition can be brought to a halt. If the catalyst is not deactivated, esterification reaction often occurs, when the obtained urethane prepolymer is stored in the presence of moisture or heated in the presence of moisture in a subsequent reaction, or when the resultant maleimide compound and cured product of the pressure-sensitive adhesive are stored in the presence of moisture, and thereby the physical properties of the pressure-sensitive adhesive are markedly degraded.

As the phosphorus compounds, mention may be made of inorganic or organic phosphorus compounds and the like listed in the following (a) to (e).

### (a) Phosphoric acid and the alkyl esters thereof

The phosphoric acid alkyl esters include trialkyl esters such as trimethyl phosphate, triethyl phosphate, tributyl phosphate, trinonyl phosphate, triphenyl phosphate and the like.

### (b) Organic esters of phosphonic acid

It includes dibutylbutyl phosphonate and the like.

### (c) Phosphorous acid

Phosphorous acid is used alone or in combination with other phosphorus compounds, which has the strongest effects of stabilizing hue and preventing oxidative degradation.

### (d) Organic esters of phosphorous acid

They include dibutyl hydrogen phosphate, triphenyl phosphite and the like. However, triphenyl phosphite sometimes degrades the properties of the polyester skeleton in the maleimide compound, and accordingly it is necessary to pay attention to the addition amount thereof.

### (e) Other inorganic phosphorus compounds

It includes polyphosphoric acid and the like.

The amount of a phosphorus compound to be added may be appropriately set according to molecular weight of the phosphorus compound (content of phosphorus atom); generally, the amount is preferably 0.001 to 3 parts by mass, and more preferably 0.01 to 1 part by mass, in relation to 100 parts by mass of the polyester polyol. When the addition amount of a phosphorus compound is less than 0.001 part by mass, no effect resulting from the addition can be found, while when the addition amount is larger than 3 parts by mass, no further increase of the effect is expected.

### B) Maleimide/active hydrogen compound

As the maleimide/active hydrogen compound, an alcohol having a maleimide group (hereinafter referred to as a maleimide alcohol) is preferable. As the maleimide alcohol, mention may be made of the maleimide alcohol represented by the following formula (2) and the like.

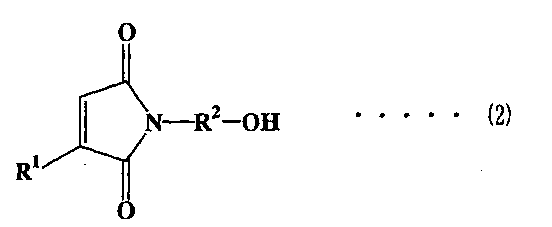

In formula (2), R¹ represents the same groups as described above, R² represents an alkylene group and preferably a straight chain or branched chain alkylene group having 1 to 6 carbon atoms.

As the compound (1), a maleimide compound having a polyester skeleton, prepared by use of a urethane prepolymer the raw material of which is a polyester polyol, is preferable because it excels in curability with active energy beams and in water resistance of the cured film.

### C) Method for preparing the maleimide compound

As for the method for preparing the maleimide compound, the maleimide compound may be prepared by reacting a urethane prepolymer and a maleimide/active hydrogen compound with each other, according to generally-employed urethanization reaction. The specific urethanization reaction includes a method similar to that described above.

In the preparation of the maleimide compound, it is preferable that the reaction is carried out in the presence of an antioxidant for the purpose of preventing discoloration of the resultant maleimide compound.

The antioxidant includes generally used phenol based, triphosphite based and amine based antioxidants; for example, compounds described in Japanese Patent Publication Nos. S36-13738B, S36-20041B, S36-20042B and S36-20043B.

As the phenol based antioxidant, various types can be used, and the following compounds are particularly preferable: butylhydroxytoluene, pentaerythrityl tetrakis[3-(3,5-di-t-butyl-4-hydroxyphenyl)propionate], octadecyl-3-(3,5-di-t-butyl-4-hydroxyphenyl)propionate and the like.

The phenol based antioxidant can be used in combination with zinc oxide for the purpose of enhancing the effect.

The proportion of the antioxidant to be added is preferably 0.01 to 2 parts by mass in relation to the 100 parts by mass of the urethane prepolymer. When this proportion is less than 0.01 part by mass, a sufficient effect of blending of the antioxidant cannot be obtained as the case may be, while the blending with a proportion larger than 2 parts by mass can be expected to provide no further increase of effect, and hence is disadvantageous in cost.

Additionally, when the maleimide compound is prepared, the above described phosphorus compound may be blended.

### 1-2. Compound (2)

The compound (2) is an esterification reaction product between a prepolymer having two or more carboxyl groups at terminals thereof (hereinafter simply referred to as carboxylic acid prepolymer) and a maleimide/active hydrogen compound.

The carboxylic acid prepolymer includes one prepared by use of polycarboxylic acids and polyhydric alcohols as described above, and is preferably one having a polyester skeleton. The maleimide/active hydrogen compound includes the compounds similar to those described above.

The method for esterification between the carboxylic acid prepolymer and the maleimide/active hydrogen compound may follow the method similar to that described above.

The compound (2) is preferably used as a maleimide compound that is required to be lower in viscosity.

### 1-3. Compound (3)

The compound (3) is an esterification reaction product between a prepolymer having two or more hydroxy groups at terminals thereof (hereinafter simply referred to as polyol prepolymer) and a carboxylic acid having a maleimide group (hereinafter referred to as a maleimide carboxylic acid).

The polyol prepolymer includes those as described above in connection with the polyester polyol, and is preferably that having a polyester skeleton.

As the maleimide carboxylic acid, various types of compounds can be used, and the compounds represented by the following formula (3) are preferable.

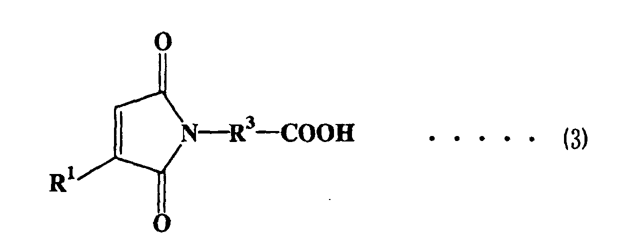

In formula (3), R¹ represents the same groups as described above, R³ represents an alkylene group, and is preferably a straight chain or branched chain alkylene group having 1 to 6 carbon atoms.

The esterification reaction between the polyol prepolymer and the maleimide carboxylic acid may follow the method as described above.

The compound (3) is preferably used as a maleimide compound that is required to be lower in viscosity.

### 1-4. Miscellaneous

Among the above described compounds (1) to (3), the compound (1) is preferable in that the compound (1) is faster in reaction rate, higher in yield and easier to prepare than the compounds (2) and (3). For applications where the maleimide compound is required to be low in viscosity, the compounds (2) and (3) are preferable.

The maleimide compound can be adjusted in terms of viscosity and fluidity as well as pressure-sensitive adhesive strength, holding power and tackiness of the cured film, by varying copolymerization composition depending upon purposes.

As the maleimide compound used in the present invention, various compounds can be used as far as the compounds have the above described maleimide groups; the compounds having a polyester skeleton are preferable because they are excellent in pressure-sensitive adhesive strength.

As the maleimide compound, compounds other than those cited above can also be used. For example, compounds having, in the skeleton thereof, an ethylenically unsaturated group as well can also be used for the purpose of further improving the curability with irradiation of active energy beams.

### 2. Pressure-sensitive adhesive curable with active energy beams

The pressure-sensitive adhesive of the present invention requires the above described maleimide compound as an indispensable component.

The pressure-sensitive adhesive of the present invention can be composed of various components as required, in addition to the maleimide compound. Now, description will be made below of the respective components

### 2-1. Photopolymerization initiator and the like

As described above, the pressure-sensitive adhesive of the present invention is easily curable with active energy beams; even when cured with ultraviolet light or visible light, the pressure-sensitive adhesive of the present invention has an excellent curability without blending of photopolymerization initiators or with blending of a small amount of a photopolymerization initiator, but can be blended with a photopolymerization initiator or the like as required.

In the case where a photopolymerization initiator is blended, examples of the photopolymerization initiator include benzoin and its alkyl ethers, acetophenones, anthraquinones, thioxanthones, ketals, benzophenones, xanthones, acylphosphine oxides, α-diketones and the like.

Additionally, for the purpose of improving the sensitivity to active energy beams, photosenistizers can be used.

As the photosensitizer, mention may be made of benzoic acid based photosensitizers, amine based photosensitizers, and the like. These photosensitizers can be used in combination of two or more thereof. The blending proportion of these photosensitizers is preferably 0.01 to 10 parts by mass in relation to 100 parts by mass of the maleimide compound.

As the photopolymerization initiator, benzophenones and thioxanthones are preferable because they are highly effective for improving the curing rate of the compositions.

### 2-2. Compounds having reactive unsaturated groups

For the purpose of enhancing the pressure-sensitive adhesive performance of the cured film, or for the purpose of adjusting the sensitivity of the pressure-sensitive adhesive, the present pressure-sensitive adhesive may contain a compound having a reactive unsaturated group such as (meth)acrylic monomer, (meth)acrylic oligomer and the like.

Examples of the (meth)acrylic monomer include alkyl acrylates or alkyl methacrylates (hereinafter acrylate or methacrylate will be referred to as (meth)acrylate), hydroxyalkyl (meth)acrylates, (meth)acrylates of phenol alkylene oxide adducts, mono or di(meth)acrylates of glycols, and polyol poly(meth)acrylates, poly(meth)acrylates of polyol alkylene oxide adducts.

Examples of the (meth)acrylic oligomer include urethane (meth)acrylate oligomers, polyester (meth)acrylate oligomers, and epoxy(meth)acrylate oligomers.

The proportion of the compound having a reactive unsaturated group to be added is preferably 50 parts by mass or less, and more preferably 20 parts by mass or less, in relation to 100 parts by mass of the maleimide compound.

### 2-3. Polymers

The pressure-sensitive adhesive of the present invention may be supplemented with a polymer for the purpose of adjusting the viscosity before curing or adjusting the pressure-sensitive adhesive performance after curing. There is no particular limitation to the polymer concerned, and examples of the polymer include (meth)acrylate based polymers, polystyrenes and polyolefins. Among these, (meth)acrylate based polymers having a maleimide group represented by the below described formula (4) are preferable for the purpose of enhancing water resistance and heat resistance of the pressure-sensitive adhesive because these polymers form, upon curing, crosslinkage with the maleimide compound of the present invention.

### 2-4. Other maleimide compounds

The pressure-sensitive adhesive of the present invention may contain a compound having one maleimide group as far as curability with irradiation of active energy beams and performance of the cured film are not damaged.

Examples of the compound concerned include a compound having one maleimide group in a skeleton as described above, a compound having a maleimide group and an ethylenically unsaturated group, and the like.

In the case where the maleimide compound of the present invention is originated from a polymer polyol prepared from the above described radically polymerizable monomers, the polymer polyol is often a mixture of a polymer polyol having two or more hydroxy groups in a molecule and a polymer polyol having one hydroxy group in a molecule. In this case, the resultant compound is a mixture of a compound having two or more of maleimide groups and a compound having one maleimide group, and can be used as it is.

The blending proportion of the compound having one maleimide group is preferably 80 parts by mass or less and more preferably 50 parts by mass or less, in relation to 100 parts by mass of the maleimide compound.

Additionally, as far as curability with irradiation of active energy beams and performance of the cured film are not degraded, compounds having maleimide groups other than the above described maleimide groups can be used.

As compounds having such maleimide groups concerned, mention may be made of a compound having a maleimide group represented by the below described formula (4), formula (5) or the like and having a skeleton as described above, a compound having a maleimide groups represented by the below described formula (4), formula (5) or the like and an ethylenically unsaturated group, and the like. The blending proportions of these maleimide compounds are preferably 150 parts by mass or less, and more preferably 50 parts by mass or less, in relation to 100 parts by mass of the maleimide compound.

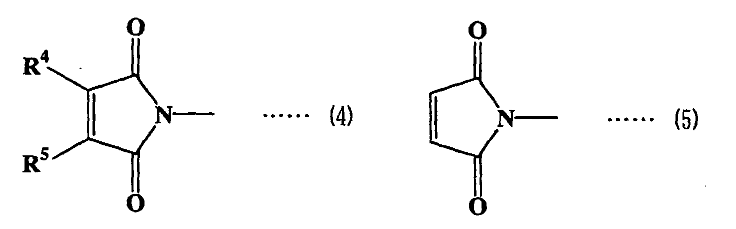

Here, in formula (4), R⁴ and R⁵ are each independently an alkyl group having 4 or less carbon atoms, or a group fused to form a carbon ring. Examples of the group fused to form a carbon ring include the group -CH₂CH₂CH₂-, the group -CH₂CH₂CH₂CH₂-, and the like.

Among the compounds having maleimide groups other than the above described maleimide groups, compounds having two or more maleimide groups represented by the above described formula (5) are preferable because these compounds can improve the curability of the pressure-sensitive adhesive. These compounds preferably have the skeleton as described above. The blending proportion of the maleimide compound concerned is preferably 150 parts by mass or less, and more preferably 50 parts by mass or less, in relation to 100 parts by mass of the maleimide compound.

### 2-5. Tackifiers

The pressure-sensitive adhesive of the present invention may contain a tackifier for the purpose of lowering glass transition temperature (hereinafter abbreviated as Tg) or enhancing pressure-sensitive adhesive performance of the cured film.

As the tackifier, various substances can be used; examples thereof include natural resins such as rosin based resins and terpene based resins and the derivatives thereof, and synthetic resins such as petroleum resins. Among these, preferable are those compounds which have no double bond or are small in double bond content, because they do not inhibit the curing with active energy beams of the pressure-sensitive adhesive.

The blending proportion of the tackifier is preferably 20 parts by mass or less, and more preferably 10 parts by mass or less in relation to 100 parts by mass of the maleimide compound. When the blending proportion of the tackifier exceeds 20 parts, the viscosity of the pressure-sensitive adhesive becomes too high, and accordingly, the coatability and the heat resistance are degraded as the case may be.

### 2-6. Crosslinkers

The pressure-sensitive adhesive of the present invention may contain a crosslinker capable of reacting rapidly at ordinary temperature, for the purpose of forming crosslinkage between polymer molecules and enhancing heat resistance and water resistance. Examples of the crosslinker include polyisocyanate compounds, polyoxazoline compounds, epoxy resins, aziridine compounds, polycarbodimaleimide compounds and coupling agents.

### 2-7. Acid masking agents

When the maleimide compound is derived from a polyester, it is preferable that an acid masking agent is blended in the pressure-sensitive adhesive.

The ester bonds abundant in such pressure-sensitive adhesives are hydrolyzed by the moisture and the molecular weight thereof is thereby lowered, in the case where the pressure-sensitive adhesive is used over a long period of time under a harsh condition such as high temperature or humidity; additionally, the acidic carboxylic groups generated by the hydrolysis further promote the hydrolysis of the ester bonds, and as is known, there are problems in that the pressure-sensitive adhesive strength is lowered, and when a pressure-sensitive adhesive article is peeled off, the lowered pressure-sensitive adhesive strength causes problems such that the pressure-sensitive adhesive layer undergoes the cohesion failure and after peeling off, the adhesive deposit is left on the matter that have been coated with the pressure-sensitive adhesive concerned.

In this case, blending of the acid masking agent can trap the carboxylic groups generated by the hydrolysis so that the hydrolysis can be prevented from further proceeding.

As the acid masking agent, mention may be made of carbodiimide compounds, oxazoline compounds, epoxy compounds, and the like.

The blending proportion of the acid masking agent is preferably 0.1 to 2 parts by mass in relation to 100 parts by mass of the maleimide compound. When this proportion is less than 0.1 part by mass, no sufficient effect of blending the acid masking agent is displayed as the case may be, while even when the blending proportion exceeds 2 parts by mass, no further effect can be expected, disadvantage to the cost thereby arises, and the masking agent exhibits a plasticizing effect, thereby causing the lowering of the pressure-sensitive adhesive performance of the cured product.

### 2-8. Ultraviolet light absorbers and light stabilizers

The pressure-sensitive adhesive of the present invention may contain an ultraviolet light absorber and a light stabilizer in order to improve light resistance.

Examples of the ultraviolet light absorber include benzotriazole based ultraviolet light absorbers, and more specifically, 2-(5-methyl-2-hydroxyphenyl)benzotriazole and 2-(3,5-di-t-amyl-2-hydroxyphenyl)benzotriazole.

Examples of the light stabilizer include hindered amine based light stabilizers and benzoate based light stabilizers. Examples of the hindered amine based light stabilizers include bis(1,2,2,6,6-pentamethyl-4-piperidinyl)sebacate and bis(1,2,2,6,6-pentamethyl-4-piperidinyl) 2-(3,5-di-t-butyl-4-hydroxybenzyl)2-n-butylmalonate. Examples of the benzoate based light stabilizer include 2,4-di-t-butylphenyl-3,5-di-t-butyl-4-hydroxybenzoate.

### 2-9. Miscellaneous

The pressure-sensitive adhesive of the present invention may contain a filler for the purpose of coloring and enhancing adhesive performance. Specific examples of the filler include various types of silica, dyes, calcium carbonate, magnesium carbonate, titanium oxide, iron oxides, glass fibers, and the like.

Additionally, according to use, radical polymerization inhibitors including hydroquinone and hydroquinone monomethyl ether may be blended.

In addition to these, the following common additives used in adhesives or pressure-sensitive adhesives can be simultaneously used in the proportions usually applied: antifoamers, dyes and pigments, thickeners, lubricants, film forming aids, fillers, plasticizers, antistatic agents, textile auxiliaries, detergents, antistatic agents, level dyeing agents, dispersion stabilizers, hydrophilic resins, latexes, wetting agents, leveling improvers and the like.

Additionally, for the purpose of adjusting the viscosity, organic solvents can be blended as required.

Furthermore, the above described phosphorus compounds and antioxidants can be blended.

### 3. Method for producing pressure-sensitive adhesive sheets

The pressure-sensitive adhesive of the present invention can be used in various uses, and is used usually in a form of a pressure-sensitive adhesive sheet.

The pressure-sensitive adhesive sheet may be produced following the conventional methods. Examples of the preferable methods include a method in which the pressure-sensitive adhesive of the present invention is coated onto a substrate, and the coating concerned is irradiated with an active energy beam and thereby cured.

Examples of the substrate include metals, plastics, glass, ceramics, wood, paper, printing paper and fibers. Examples of the metals include aluminum, iron and copper; and examples of the plastics include vinyl chloride polymers, acrylate based polymers, polycarbonate, polyethylene terephthalate, acrylonitrile-butadiene-styrene copolymer, polyethylene and polypropylene.

Examples of the coating method of pressure-sensitive adhesives include roll coating, gravure printing, screen printing, die coating and knife coating.

The coating quantity of a pressure-sensitive adhesive for a substrate may be appropriately chosen according to the intended use; the coating quantity is preferably 5 to 200 g/m², and more preferably 10 to 100 g/m². When the coating quantity is less than 5 g/m², the pressure-sensitive adhesive strength often comes to be insufficient, while when the coating quantity is 200 g or more, the active energy beam can hardly reach the deep portion and accordingly the intended performance cannot be obtained as the case may be.

After the completion of the coating process, an active energy beam is irradiated and the maleimide groups of the maleimide compound are thereby crosslinked to each other to increase the molecular weight, so that the cohesion force and the pressure-sensitive adhesive strength of the obtained cured film are enhanced.

The method for irradiating the active energy beam in this case may follow the method applied to the conventional pressure-sensitive adhesive curable with active energy beams. Examples of the active energy beam include visible light, ultraviolet light, X-ray and electron beam; it is preferable to use ultraviolet light, for which an inexpensive device can be used. Examples of the light source for the case where ultraviolet light is used include an ultra high pressure mercury lamp, a high pressure mercury lamp, a medium pressure mercury lamp, a low pressure mercury lamp, a metal halide lamp, a xenon lamp, an electrodeless discharge lamp and a carbon arc lamp; it is sufficient to irradiate for a few seconds to a few minutes.

Additionally, the Tg of the cured film made of the pressure-sensitive adhesive of the present invention is preferably -10°C or below, and more preferably -30°C or below. Herein, it should be noted that the Tg referred to in the present invention means the peak temperature of the tanδ obtained by measuring the temperature dependence by use of a dynamic viscoelasticity measurement apparatus.

### 4. Applications

The pressure-sensitive adhesive of the present invention can be used for various applications.

Examples of the applications include pressure-sensitive adhesive products made of pressure-sensitive adhesive tapes, pressure-sensitive adhesive labels and pressure-sensitive adhesive sheets; examples of these pressure-sensitive adhesive products include pressure-sensitive adhesive sheets for use in confidential post cards, pressure-sensitive adhesive sheets for use in wallpaper, pressure-sensitive adhesive double coated tapes, seals, stickers and masking films.

In particular, the pressure-sensitive cured film of the present invention is excellent in water resistance, and accordingly useful for production of pressure-sensitive adhesives for use in the applications requiring water resistance, more specifically, seals for canned beverage containers, and advertising displays and stickers for vehicles both used in the outdoors. Additionally, the pressure-sensitive adhesive of the present invention is high in safety, and hence can be preferably used as the pressure-sensitive adhesive used for the tapes and the like directly affixed to the skin. Specific examples include the following articles: first aid plasters; magnetic plasters; surgical tapes used for fixing gauze or a catheter to the body; wound-healing dressing materials (dressings) used in the curing in which the wound is tightly covered for preventing the wound from being infected from the outside, simultaneously easing the pain, and keeping the wound in a wet condition; tapes for sport taping for protecting and reinforcing injured portions of joints and muscle for the purpose of the prevention of the injury at the time of exercise, the first aid treatment, the prevention of recurrence (rehabilitation), and the like; and the tape preparations used in transdermal therapeutic systems in which medicine is absorbed through the skin and delivered into the body.

The advantages of the present invention are summarized as follows. According to the present pressure-sensitive adhesive curable with active energy beams, the adhesive concerned is liquid at ordinary temperature, so that it is easy to handle, excellent in coatability; and even when irradiated with visible light or ultraviolet light, it has a practical crosslinking property and a practical curability in the absence of a photopolymerization initiator, so that it is low in unfavorable odor and toxicity, and safe. Additionally, the obtained cured film has characteristics such that it suffers from no discoloration, is excellent in various pressure-sensitive adhesive performances, and excellent in water resistance and heat resistance.

### Best Mode for Carrying Out the Invention

More specific description of the present invention will be made below with reference to the examples and comparative examples.

Meanwhile, it should be noted that, in the following, "parts" means "parts by mass".

### Example 1

In a flask equipped with a stirrer, a thermometer and a condenser, 250 g of polyester polyol, namely, KYOWAPOL 5000PA (polyester diol, namely, a reaction product between 2,4-diethyl-1,5-pentanediol and adipic acid, manufactured by Kyowa Hakko Kogyo Co., Ltd.) was placed at room temperature, heated to raise the temperature up to 120°C while being stirred, and dehydrated for 1 hour under reduced pressure.

After dehydration, the dehydrated matter was cooled to 80°C, combined with 22.8 g of isophorone diisocyanate (hereinafter referred to as IPDI), mixed together for 1 hour, and then supplemented with 0.050 g of di-n-butyltin dilaurate (hereinafter referred to as DBTL) to allow the reaction to proceed for 2 hours. Additionally, 15.9 g of 2-hydroxyethyl citracoimide (a compound represented by the above described formula (2) in which R¹ is methyl group and R² is ethylene group; hereinafter referred to as CM-ETA) was added thereto, and the reaction was allowed to proceed for 2 hours to produce a maleimide compound.

The viscosity of this compound at 25°C was 600,000 mpa·S, and the number average molecular weight thereof was about 6,000. This compound is referred to as M1.

### Example 2

A maleimide compound was prepared in the same manner as in Example 1, except that 250 g of KYOWAPOL 5000PA, 16.8 g of 1,6-hexamethylene diisocyanate (manufactured by Nippon Polyurethane Industry Co., Ltd.; hereinafter referred to as HDI) in place of IPDI, 0.025 g of DBTL, and 15.8 g of CM-ETA were used; and 0.1 g of butylhydroxytoluene as an antioxidant was added before CM-ETA was added.

The viscosity of this compound at 25°C was 1,000,000 mpa·S, and the number average molecular weight thereof was about 6,000. This compound is referred to as M2.

### Example 3

A maleimide compound was prepared in the same manner as in Example 1, except that KYOWAPOL 5000PA was replaced with 200 g of KYOWAPOL 2000PA (polyester diol, namely, a reaction product between 2,4-diethyl-1,5-pentanediol and adipic acid, manufactured by Kyowa Hakko Kogyo Co., Ltd.), and 40.7 g of IPDI, 0.038 g of DBTL and 31.8 g of CM-ETA were used.

The viscosity of this compound at 25°C was 900,000 mpa·S, and the number average molecular weight thereof was about 3,000. This compound is referred to as M3.

### Example 4

A maleimide compound was prepared in the same manner as in Example 1, except that KYOWAPOL 5000PA was replaced with 200 g of KYOWAPOL 2000BA (polyester diol as a reaction product between butylethylpropane diol and adipic acid, manufactured by Kyowa Hakko Kogyo Co., Ltd.), and 40.7 g of IPDI, 0.038 g of DBTL and 31.8 g of CM-ETA were used.

The viscosity of this compound at 25°C was 7,500,000 mpa·S, and the number average molecular weight thereof was about 3,000. This compound is referred to as M4.

### Example 5

M1 prepared in Example 1 and M'3 prepared in Comparative Example 3 described below were blended in a mass ratio of 2:1. The viscosity of this composition at 25°C was 780,000 mpa·S

### Example 6

To 100 parts by mass of M1 prepared in Example 1, 0.2 part by mass of an acid masking agent, namely, ELASTOSTAB H01 manufactured by Nisshinbo Industries, Inc., which is a carbodiimide compound, and 0.01 part by mass of triphenyl phosphate (hereinafter referred to as TPP) as a phosphorus compound were added. The viscosity of this composition at 25°C was 600,000 mpa·S.

### Example 7

To 100 parts by mass of M1 prepared in Example 1, was added 3 parts by mass of a polyether based bismaleimide acetate compound represented by the following formula (6) (LUMICURE MIA-200 manufactured by Dainippon Ink & Chem. Inc.; hereinafter referred to as LUM; in formula (6), R represents alkylene group, and n represents a value corresponding to a number average molecular weight of about 1,000). The viscosity of this composition at 25°C was 550,000 mpa·S.

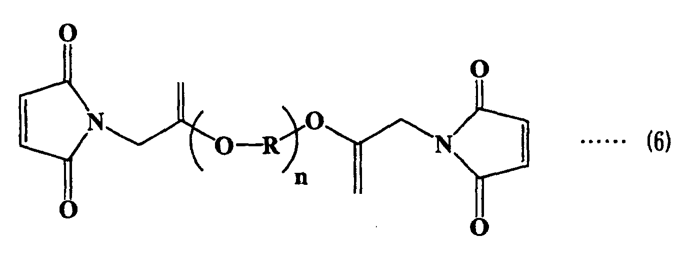

### Example 8

In a flask which was similar to that used in Example 1 and equipped with a Dean-Stark trap, 240 g of a polyester having carboxylic acid groups at both ends (a reaction product between 2,4-diethyl-1,5-pentanediol and adipic acid, with a number average molecular weight of 3030 and an acid value of 37 KOH mg/g) was placed at room temperature, heated to raise the temperature up to 120°C while being stirred, and dehydrated for 1 hour under reduced pressure.

The temperature was raised up to 160°C still under reduced pressure, thereafter 27.3 g of CM-ETA and 0.28 mg of a titanate based polymerization catalyst, namely, tetrabutoxy titanium were added thereto, and reaction was allowed to proceed for 20 hours to yield a maleimide compound.

The viscosity of this compound at 25°C was 15,000 mpa·S, and the number average molecular weight thereof was about 3,350. This compound is referred to as M5.

### Example 9

A maleimide compound was prepared in the same manner as in Example 1, except that KYOWAPOL 5000PA was replaced with 200 g of KURAPOL P-4050 (polyester diol as a reaction product between 3-methyl-1,5-pentanediol and sebacic acid, manufactured by Kuraray Co., Ltd.), and 23 g of IPDI, 0.025 g of DBTL and 16.5 g of CM-ETA were used; and 0.04 g of pentaerythrityl-tetrakis(3-(3,5-di-t-butyl-4-hydroxyphenyl)propionate) (IRGANOX 1010, manufactured by Ciba Speciality Chemicals Ltd.) as an antioxidant and 0.1 g of TPP as a phosphorus compound were added thereto.

The viscosity of this compound at 25°C was 650,000 mpa·S, and the number average molecular weight thereof was about 5,000. This compound is referred to as M6.

### Example 10

A maleimide compound was prepared in the same manner as in Example 1, except that 200 g of a polyester diol compound A1 which had a number average molecular weight of about 5,000 and was prepared from the reaction of 0.6 mol of 2,4-diethyl-1,5-pentanediol, 0.1 mol of ethyleneglycol, 0.3 mol of 1,6-hexanediol and 1 mol of sebacic acid, 18.3 g of IPDI, 0.025 g of DBTL, and 13 g of CM-ETA were used; and 0.04 g of BHT as an antioxidant and 0.1 g of TPP as a phosphorus compound were added thereto.

The viscosity of this compound at 25°C was 550,000 mpa·S, and the number average molecular weight thereof was about 6,000. This compound is referred to as M7.

### Example 11

In a flask similar to that in Example 8, 200 g of KURAPOL P-4050 was placed, and additionally 18.6 g of carboxymethyl citracoimide (a compound represented by the above described formula (3) in which R₁ is methyl group and R₃ is methylene group), 300 g of toluene and 3.0 g of paratolunensulfonic acid were placed; heating at 120°C was carried out for 6 hours while the toluene was being refluxed, and 1.8 g of water was removed by distillation.

The reaction solution was cooled, and thereafter transferred into a separating funnel; and then the organic layer was washed 3 times by repeating the sequence of operations of putting 200 g of water in the funnel, sufficiently shaking the mixture, allowing the solution to stand still and separate, and then discarding the lower layer of the water phase. The obtained organic layer was heated under reduced pressure to remove the toluene by distillation, and thus a maleimide compound was obtained.

The viscosity of this compound at 25°C was 35,000 mpa·S, and the number average molecular weight thereof was about 4,820. This compound is referred to as M8.

### Comparative Example 1

A maleimide compound different from the maleimide compound of the present invention was obtained by carrying out the reaction in the same manner as in Example 2 except that in place of CM-ETA, 20.5 g of 2-hydroxyethyltetrahydrophthalimide (a compound represented by the following formula (7); hereinafter referred to as HT-ETA) was used.

The viscosity of this compound at 25°C was 900,000 mpa·S, and the number average molecular weight thereof was about 6,000. This compound is referred to as M'1.

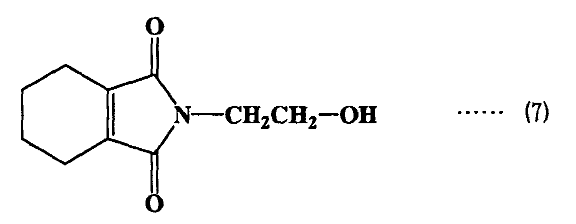

### Comparative Example 2

In a flask similar to that in Example 1, 150 g of a polyester, HS 2H-200S (a polyester as a reaction product between sebatic acid and 1,6-hexanediol, manufactured by Hokoku Corp.), was placed, and dehydration was carried out for 30 minutes in the same manner as in Example 1.

After dehydration, the reaction solution was cooled down to 80°C, and 25.1 g of HDI as an isocyanate was added thereto and mixed for 30 minutes. Then, 0.01 g of DBTL was added to allow the reaction to proceed for 2 hours. Additionally, 24.3 g of CM-ETA was added to allow the reaction to proceed for 2 hours, and thus a maleimide compound was obtained.

This compound was solid at 25°C. This compound is referred to as M'2.

### Comparative Example 3

A maleimide compound different from the maleimide compound of the present invention was obtained by carrying out the reaction in the same manner as that in Example 1 except that in place of CM-ETA, 24.3 g of 2-hydroxyethyl maleimide (a compound represented by the following formula (8); hereinafter referred to as MT-ETA) was used.

The viscosity of this compound at 25°C was 800,000 mpa·S, and the number average molecular weight thereof was about 6,000. This compound is referred to as M'3.

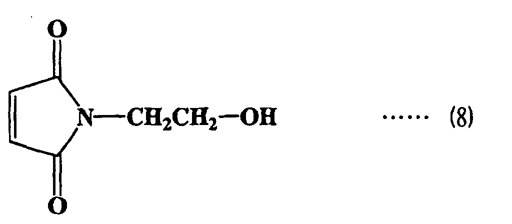

### Evaluation

The compounds and compositions obtained in the above described examples and comparative examples were used as pressure-sensitive adhesives.

Onto the surface of a 50 µm thick polyester film as a substrate sheet, a pressure-sensitive adhesive was applied so as to have a thickness of 25 µm, and ultraviolet light was irradiated from the coating surface side by passing the sheet 4 times under a 120 W/cm light condensing high pressure mercury lamp (one lamp; 10 cm high) at a conveyer speed of 6.6 m/min. The sheet thus obtained was cut into a 200 mm long and 25 mm wide specimen.

By use of the obtained specimen, the following tests were carried out. The results are shown in Table 1.

### (1) Pressure-sensitive adhesive strength

The 180 degree peeling strength of the specimen was measured in such a way that under the conditions of 23°C and 65% RH, the 100 mm long portion of the specimen was bonded to a SUS plate and was allowed to stand for 2 days, and then the strength was measured in accordance with JIS Z-0237.

### (2) SAFT (Shear adhesion failure temperature)

The 25 mm long specimen was bonded to a SUS plate similarly to (1), and allowed to stand for 1 day; and then a 500 g weight was suspended from an end of the specimen, the temperature was varied from 40°C to 200°C at a temperature rise rate of 0.4°C/min, and the weight fall temperature was derived from the time at which the weight fell. When the specimen was retained at 200°C, the displacement distance was measured.

### (3) Tack

In conformity with JIS Z-0237 for the ball rolling method, measurements were made in the atmosphere of 23°C and 65% RH.

### (4) Water resistance

The specimen was bonded under the conditions similar to those in the above described (1) and allowed to stand for 1 day, and then further immersed for 1 day in distilled water at 80°C; then the specimen was taken out and put again under the conditions of 23°C and 65% RH, and subsequently the pressure-sensitive adhesive strength was measured in the same manner as in (1). The lowering ratio of the thus-obtained pressure-sensitive adhesive strength with reference to the pressure-sensitive adhesive strength of (1) was calculated and evaluated on the basis of the following 3 grades.
G: The lowering ratio of the pressure-sensitive adhesive strength was less than 20%.
M: The lowering ratio of the pressure-sensitive adhesive strength was 20% or more and less than 50%.
P: The lowering ratio of the pressure-sensitive adhesive strength was 50% or more.

### (5) Yellowing of sheets

By visual inspection, degree of yellowing of the specimen was observed, and was evaluated on the basis of the following 3 grades.
- G:: No yellowing.
- M:: Slight yellowing.
- P:: Yellowing close to dark brown

**Table 1**

| | Pressure-sensitive adhesive | | | Evaluation results | | | | |
|---|---|---|---|---|---|---|---|---|
| | Maleimide compound [state] (parts) | Other maleimide compound [state] (parts) | State of pressure-sensitive adhesive | Pressure-sensitive adhesive strength (g/inch) | SAFT | Tack | Water resist -ance | Yellowing |
| Ex. 1 | M1 [liquid] | - | Liquid | 1,400 | No displacement | 8 | G | G |
| Ex. 2 | M2 [liquid] | - | Liquid | 1,350 | No displacement | 8 | G | G |
| Ex. 3 | M3 [liquid] | - | Liquid | 1,450 | No displacement | 7 | G | G |
| Ex. 4 | M4 [liquid] | - | Liquid | 1,000 | No displacement | 8 | G | G |
| Ex. 5 | M1 [liquid] (2) | M'3 [liquid] (1) | Liquid | 900 | No displacement | 7 | M | G |
| Ex. 6 | M1 [liquid] | - | Liquid | 1,500 | No displacement | 9 | G | G |
| Ex. 7 | M1 [liquid] (100) | LUM (3) | Liquid | 1,100 | No displacement | 7 | M | G |
| Ex. 8 | M5 [liquid] | - | Liquid | 900 | No displacement | 7 | G | G |
| Ex. 9 | M6 [liquid] | - | Liquid | 1,300 | No displacement | 8 | G | G |
| Ex. 10 | M7 [liquid] | - | Liquid | 1,500 | No displacement | 8 | M | G |
| Ex. 11 | M8 [liquid] | - | Liquid | 500 | No displacement | 8 | G | G |
| Com. Ex. 1 | - | M'1 [liquid] | Liquid | 2,000 | 70°C | 9 | G | G |
| Com. Ex. 2 | - | M'2 [solid] | solid | 0 | - | 2 or less | - | G |
| Com. Ex. 3 | - | M'3 [liquid] | Liquid | 700 | No displacement | 6 | P | G |
| Note: "Ex." means Example, and "Com. Ex." means Comparative Examples. | | | | | | | | |

### Industrial Applicability

The present pressure-sensitive adhesive curable with active energy beams is easy to handle, can be crosslinked or cured in the absence of a photopolymerization initiator or by addition of a small amount of a photopolymerization initiator even when irradiated with visible light or ultraviolet light; additionally, the obtained cured film is not colored, but excellent in various pressure-sensitive adhesive performances, and excellent in water resistance and heat resistance. Thus, the present pressure-sensitive adhesive is extremely suitable for applications utilizing pressure-sensitive adhesives and pressure-sensitive adhesive sheets.

## Claims

1. A pressure-sensitive adhesive curable with an active energy beam, comprising a compound which has two or more maleimide groups represented by the following formula (1) and is liquid at ordinary temperature: 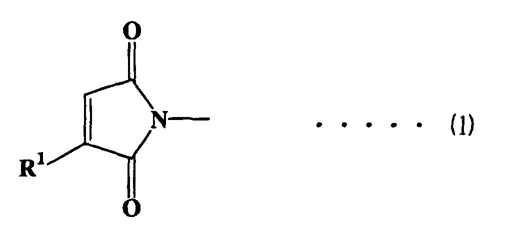 where in formula (1), R¹ represents an alkyl group, an aryl group, an arylalkyl group or a halogen atom.

2. A pressure-sensitive adhesive curable with an active energy beam, according to claim 1, in which said compound is a compound having a polyester skeleton.

3. A pressure-sensitive adhesive curable with an active energy beam, according to claim 2, in which said compound is one or more selected from the compounds described in the following (1) to (3):
(1) an addition reaction product between a polyester based prepolymer having two or more isocyanate groups at terminals thereof and a compound having a maleimide group and an active hydrogen group;
(2) an esterification reaction product between a polyester based prepolymer having two or more carboxyl groups at terminals thereof and a compound having a maleimide group and an active hydrogen group; and
(3) an esterification reaction product between a polyester based prepolymer having two or more hydroxy groups at terminals thereof and a carboxylic acid having a maleimide group.

4. A pressure-sensitive adhesive curable with an active energy beam, according to any one of claims 1 to 3, in which said compound is one having a number average molecular weight of 2,000 to 20,000.

5. A pressure-sensitive adhesive sheet, comprising a substrate and a pressure-sensitive adhesive layer formed on the substrate by coating onto the substrate the pressure-sensitive adhesive defined in any one of claims 1 to 4, and irradiating said coating with an active energy beam to crosslink or cure said coating.
